# EUROPÄISCHE PATENTSCHRIFT

(11) **EP 3 548 954 B1**
(45) Veröffentlichungstag und Bekanntmachung des Hinweises auf die Patenterteilung: **06.01.2021**
(21) Anmeldenummer: 17801718.2
(22) Anmeldetag: 23.11.2017
(51) Int. Cl.: G02B 27/01, G02B 27/00, G02B 27/10

(54) **HEAD-UP-DISPLAY**
HEAD-UP DISPLAY
DISPOSITIF D'AFFICHAGE TÊTE HAUTE

(30) Priorität: 05.12.2016 DE 102016224162
(43) Veröffentlichungstag der Anmeldung: 09.10.2019
(73) Patentinhaber: Continental Automotive GmbH, 30165 Hannover (DE)
(72) Erfinder: VON SPIEGEL, Wolff, 61352 Bad Homburg (DE); MITSCH, Rudolf, 60311 Frankfurt am Main (DE); KRUEGER, Daniel, 64720 Michelstadt (DE); STABENOW, Ulf, 64367 Mühltal (DE); BRÖMME-JÁRTIMOVÁ, Dirk, 79252 Stegen (DE)
(86) Internationale Anmeldenummer: PCT/EP2017/080144
(87) Internationale Veröffentlichungsnummer: WO 2018/104062

(56) Entgegenhaltungen:
- WO-A1-2016/072518
- US-A1- 2016 209 647
- Andrew Maimone ET AL: "High Efficiency Near-Eye Light Field Display", ACM Trans. Graph. Article, 17. März 2015 (2015-03-17), XP055433366, Gefunden im Internet: URL:https://cs.unc.edu/~maimone/media/Maim one_GTC2015.pdf [gefunden am 2017-12-08]

## Beschreibung

Die vorliegende Erfindung betrifft ein Head-Up-Display für ein Fahrzeug. Derartige Head-Up-Displays werden verwendet, um dem Fahrzeugführer Informationen zum Fahrzeugzustand, der Umgebung, oder andere Informationen in die Windschutzscheibe einzuspiegeln. Auch Informationen für andere Insassen des Fahrzeugs können mittels eines Head-Up-Displays angezeigt werden.

Aus der DE 10 2009 054 232 A1 ist ein Head-Up-Display mit einer Anzeigeeinheit bekannt, auf welcher Leuchtpunkte erzeugbar sind, deren Lichtstrahlen durch Spiegelung an einer Windschutzscheibe des Fahrzeugs für einen Insassen des Fahrzeugs sichtbar sind. Diese Head-Up-Display hat weiterhin Ablenkmittel, die eine Vielzahl von Mikrolinsen aufweisen, die im Strahlengang zwischen der Anzeigeeinheit und der Windschutzscheibe angeordnet sind und Lichtstrahlen unterschiedlicher Leuchtpunkte in unterschiedliche Abstrahlrichtungen ablenken, und sie hat Bilderzeugungsmittel zum Erzeugen unterschiedlicher Bilder. Nachteilig an diesem bekannten Head-Up-Display ist, dass zwei Bilder erzeugt werden, je eines für ein Auge des Fahrzeugführers, oder allgemein des Betrachters, die dann auf die Leuchtpunkte der Anzeigeeinheit zuzuordnen sind. Diese Zuordnung ist nichttrivial und führt bei ungenauer Ausführung oder falscher Position oder falschem Blickwinkel des Betrachters oft zu Irritationen beim Betrachter.

Die DE 10 2015 221 008 A1 zeigt ein Head-Up-Display für ein Fahrzeug, aufweisend eine Anzeigeeinheit, Ablenkmittel, welche eine Vielzahl von Mikrolinsen aufweisen, und Bilderzeugungsmittel, welche ein Bildsignal generieren, mittels dessen die Anzeigeeinheit angesteuert wird, wobei die Bilderzeugungsmittel dazu ausgebildet sind, ein Bildsignal zu erzeugen, mittels welchem die Anzeigeeinheit eine Vielzahl von Elementarbildern darstellt, wobei jedes Elementarbild einer Mikrolinse zugeordnet ist. Diese Lösung erfordert eine sehr hoch auflösende Anzeigeeinheit, um eine für den Betrachter als angenehm empfundene Auflösung zu erzielen. Ein solches Empfinden läßt den Betrachter weniger ermüden, lenkt ihn weniger ab, und erhöht somit die Fahrsicherheit. Allerdings sind hochauflösende Anzeigeeinheiten teuer, weshalb sie zumindest in Massenprodukten derzeit noch nicht zum Einsatz kommen. Der Einsatz einer weniger hoch auflösenden Anzeigeeinheit mit reduzierter Auflösung der Elementarbilder oder mit reduzierter Anzahl der Elementarbilder, oder mit einer Kombination daraus oder mit anderen Maßnahmen führt ebenfalls zu einer vom Betrachter als weniger angenehm empfundenen Auflösung.

Erfindungsgemäß wird vorgeschlagen, das Bilderzeugungsmittel so auszubilden, dass es eine Vielzahl von Elementarbildern erzeugen, die je einer Mikrolinse zugeordnet sind. Dies hat den Vorteil, dass statt zweier unterschiedlicher Bilder für das linke und das rechte Auge des Betrachters, eines Fahrzeugführers oder eines anderen Insassen, zu erzeugen, und diese zu zerlegen und einzeln den Bildpunkten der Anzeigeeinheit zuzuordnen, Elementarbilder erzeugt werden, die dem Bild entsprechen, welches die darzustellende Anzeige effektiv durch die Mikrolinse auf der Ebene der Anzeigeeinheit abbilden würde. Durch Umkehrung der Richtung der Lichtstrahlen wird so ein viel genaueres Bild der Anzeige erreicht, welches zudem die Position der Augen des Betrachters relativ zum Head-Up-Display berücksichtigt. Das Bilderzeugungsmittel weist dazu eine Berechnungseinheit auf, die die Vielzahl von Elementarbildern berechnet. Statt einer Windschutzscheibe ist auch ein sogenannter Combiner oder ein anderes geeignetes Spiegelelement sinnvoll einsetzbar.

Erfindungsgemäß ist vorgesehen, dass die Bilderzeugungsmittel einen optischen Vervielfacher aufweisen. Dieser vervielfacht ein von einer Berechnungseinheit berechnetes Primärelementarbild in mehrere Elementarbilder, die dann jeweils einer Mikrolinse zugeordnet sind. Dabei wird ein Primärelementarbild vorzugsweise auf 3 x 3, also neun Elementarbilder vervielfacht, auf 4 x 4 oder auch auf 2 x 4 Elementarbilder. Auch eine kleinere oder größere Anzahl von Elementarbildern oder stärker längliche Elementarbilder sind vorteilhaft möglich, erfordern aber einen komplizierteren Aufbau des Vervielfachers. Ein Vorteil der Verwendung eines optischen Vervielfachers liegt darin, dass eine geringere Anzahl an Bildpunkten der Anzeigeeinheit ausreicht, um dennoch eine hohe Anzahl und gute Auflösung der Elementarbilder zu erzielen. Dies führt zu einem qualitativ hochwertigen Bildeindruck beim Betrachter, obwohl auf eine entsprechend hohe Bildauflösung des Anzeigeelements verzichtet wird. Erfindungsgemäß wird die Anforderung an die Auflösung der Anzeigeeinheit abgesenkt indem eine optische Replikation von Primärelementarbildern zu Elementarbildern erfolgt.

Das Bilderzeugungsmittel weist vorteilhaft eine Berechnungseinheit auf. Mittels dieser werden Buchstaben, Symbole und/oder Zeichen derart berechnet, daß sie dem Betrachter in einer jeweils geeigneten Entfernung erscheinend dargestellt werden. Ein weiterer Vorteil besteht darin, daß bei der Berechnung eine Kompensation einer Krümmung einer Windschutzscheibe, eines anderen spiegelnden Elements oder eines anderen Elements im Strahlengang vorgenommen wird.

Der optische Vervielfacher weist erfindungsgemäß eine Vielzahl von n x m-Linsenmatrizen auf. Dabei ist vorzugsweise n = m= 3. Es sind aber auch vorteilhafte Ausgestaltungen mit m ≠ n möglich. Die Linsenelemente der n x m-Linsenmatrix bilden ein Primärelementarbild auf n x m entsprechend verkleinerte Elementarbilder ab. Die Linsenelemente sind im einfachsten Fall Ausschnitte einer verkleinert abbildenden Linse, die entsprechend versetzt beziehungsweise verkippt angeordnet sind.

Vorteilhafterweise ist vorgesehen, dass die Linsenelemente einer n x m-Linsenmatrix in Teilelemente zerlegt sind, die ineinander verschachtelt angeordnet die n x m-Linsenmatrix bilden. Dies hat den Vorteil, dass die effektive Apertur jedes Linsenelements vergrößert wird.

Erfindungsgemäß weist der optische Vervielfacher eine Vielzahl von n x m-Prismenmatrizen auf. Mittels der Prismenelemente einer n x m-Prismenmatrix wird der jeweilige Lichtkegel wieder so ausgerichtet, dass er zur richtigen Mikrolinse gerichtet ist.

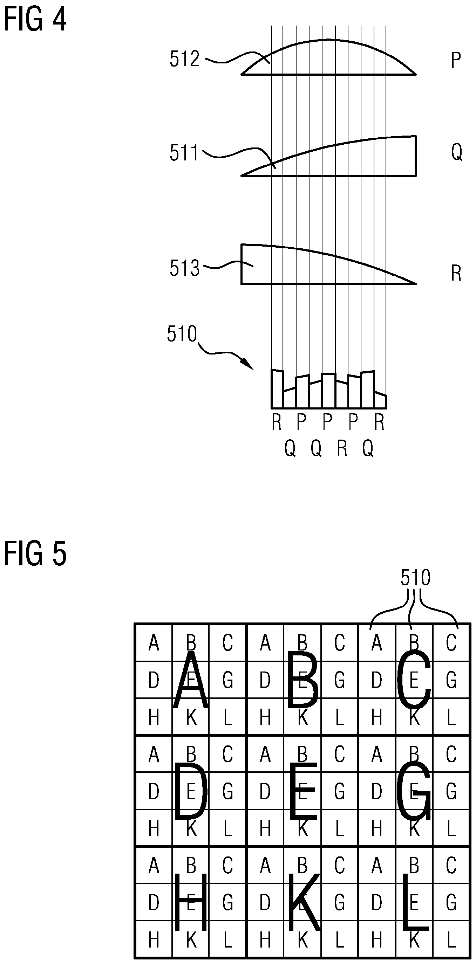

Vorteilhafterweise sind die Prismenelemente der n x m-Prismenmatrix mit einem Diffusor versehen, der vorteilhafterweise in die Prismenmatrix integriert ist. Dies hat den Vorteil eine Kompensation beziehungsweise eine Verwischung von Artefakten zu erreichen. Solche Artefakte können durch die Stückelung der Linsenmatrix, wie sie weiter unten zu Fig.4 gezeigt ist, auftreten.

Erfindungsgemäß ist vorgesehen, dass der optische Vervielfacher dazu ausgebildet ist, zusätzlich zu der Vervielfachung der Primärelementarbilder auch eine Verschiebung der Elementarbilder hervorzurufen. Obwohl eine identische Vervielfachung eines Primärelementarbildes zu mehreren identischen Elementarbildern einen guten Eindruck beim Betrachter hervorruft, da die Anzahl der Elementarbilder eine große Rolle für den optischen Eindruck beim Betrachter spielt, hat es sich herausgestellt, dass eine unterschiedliche Verschiebung der einzelnen Elementarbilder zueinander einen noch besseren optischen Eindruck hinterlässt. Die Verschiebung erfolgt dabei auf die zentrale optische Achse des Head-Up-Displays zu, wobei nach der Verschiebung überstehende Teile der Elementarbilder abgeschnitten werden. Dies verbessert den optischen Eindruck beim Betrachter. Zum Abschneiden ist vorzugsweise eine Blende vorgesehen. Dies ist beispielsweise ein zwischen den Mikrolinsen, den Linsenelementen oder den Prismenelementen ausgebildeter intransparenter Steg. Obwohl eine für jedes Elementarbild einzeln berechnete Darstellung einen noch besseren Eindruck beim Betrachter erzeugt, haben die Erfinder herausgefunden, daß diese erfindungsgemäße Maßnahme bereits so nahe am Optimum ist, daß für den Betrachter in nahezu allen Fällen kein oder kaum ein Unterschied zum Optimum erkennbar ist.

Erfindungsgemäß weist das Head-Up-Display ein Positionsdetektionsmittel auf und ein Bildverschiebemittel, welches mit dem detektierten Positionssignal beaufschlagt wird. Mit dem Positionsdetektionsmittel wird die Position des Kopfes beziehungsweise die Position der Augen des Betrachters detektiert. Das Bildverschiebemittel ist vorzugsweise im Bilderzeugungsmittel integriert, welches die auf der Anzeigeeinheit anzuzeigenden Elementarbilder beziehungsweise Primärelementarbilder entsprechend der Veränderung der Position der Augen des Betrachters verschiebt, um so die sogenannte Eyebox nachzuführen. Als Eyebox wird der räumliche Bereich bezeichnet, aus dem heraus der Beobachter das vom Head-Up-Display dargestellte virtuelle Bild vollständig sieht. Diese Verschiebung hat den Vorteil, dass die Anzeige mit einer kleineren Pixelanzahl auskommt und dennoch eine hochaufgelöste Darstellung für den Betrachter erzielt wird. Die Nachführung ist beispielsweise über ohnehin im Fahrzeug vorhandene Positionsdetektionsmittel zur Kopf- oder Augenpositionsdetektion ohne großen Zusatzaufwand erzielbar. Die n x n-Linsenmatrix wird bezüglich Brennweite, Lage und Ausrichtung der Linsenelemente an die verkleinerte Eyebox entsprechend angepasst. Aufgrund des erfindungsgemäßen Bildverschiebemittels lässt sich in etwa eine Halbierung der optisch abzudeckenden Eyebox von 150 mm Breite auf 75 mm Breite erzielen. Als Folge davon wird eine bessere Auflösung erreicht.

Das Head-Up-Display weist vorzugsweise Bildalternierungsmittel auf. Diese ermöglichen ein abwechselndes Darstellen von Elementarbild beziehungsweise Primärelementarbild für das linke beziehungsweise das rechte Auge auf überlappenden Bereichen der Anzeigeeinheit. Dies hat den Vorteil dass sich die Gesamtanzahl benötigter Bildpunkte der Anzeigeeinheit reduziert. Für ein Auge reicht etwa eine optisch abzudeckende Breite der Eyebox von 20 mm aus, was etwa ein Viertel einer 75 mm breiten Eyebox bei Kopfpositionsdetektion ausmacht. Der Gewinn ist hier etwa Faktor vier, da man zu einem Zeitpunkt nur 20mm abzudecken braucht. Ein Verfahren zum Betreiben eines Head-Up-Displays für ein Fahrzeug, welches ein Anzeigeelement, ein diesem nachgeschaltetes Raster von Mikrolinsen und ein Spiegelelement aufweist, weist erfindungsgemäß folgendes auf: Erzeugen einer Vielzahl von Elementarbildern, die jeweils effektiv einem Bild einer Elementarkamera einer Vielzahl von nebeneinander angeordneten Elementarkameras entspricht. Darstellen der Primärelementarbilder nebeneinanderliegend auf einem Anzeigeelement. Optisches Vervielfachen der Primärelementarbilder zu Elementarbildern. Vorteile dieses Verfahrens entsprechend den zu den Geräteansprüchen beschriebenen.

Vorteilhafte Ausgestaltungen des Verfahrens bestehen in den folgenden zusätzlichen Schritten: Berechnen einer Vielzahl von Primärelementarbildern und optisches Vervielfachen der berechneten Primärelementarbilder. Verschieben der einzelnen vervielfachten Primärelementarbilder mit jeweils angepasstem Betrag auf die optische Achse des Head-Up-Displays zu entsprechend der Parallaxe. Detektieren der Position des Kopfes oder der Augen eines Betrachters und Verschieben der auf dem Anzeigeelement dargestellten Bilder entsprechend der Positionsänderung. Alternierendes Darstellen der Bilder für das rechte und das linke Auge auf der Anzeigeeinheit. Auch hier entsprechen die Vorteile den zu den Geräteansprüchen beschriebenen.

Weitere Vorteile und Ausgestaltungen der Erfindung sind auch der nachfolgenden Beschreibung von Ausführungsbeispielen entnehmbar. Dabei zeigen:
- Fig.1: erfindungsgemäßes Head-Up-Display
- Fig.2: Ablenkmittel und optischer Vervielfacher
- Fig.3: Detail einer Prismenmatrix
- Fig.4: Linsenelement und Linsenteilelemente
- Fig.5: schematische Anordnung von Linsenteilelementen
- Fig.6: Prinzip des "Integral Imaging"
- Fig.7: Größenverhältnisse bei breiter Eyebox
- Fig.8: Größenverhältnisse bei schmaler Eyebox

- Fig.9: Größenverhältnisse bei mittelbreiter Eyebox
- Fig.10: Größenverhältnisse bei mittelbreiter Eyebox
- Fig.11: Primärelementarbild und Elementarbilder
- Fig.12: Ausschnitt eines Rasters von Mikrolinsen
- Fig.13: Ausschnitt eines anderen Rasters von Mikrolinsen
- Fig.14: erfindungsgemäßes Verfahren
- Fig.15: erfindungsgemäßes Head-Up-Display

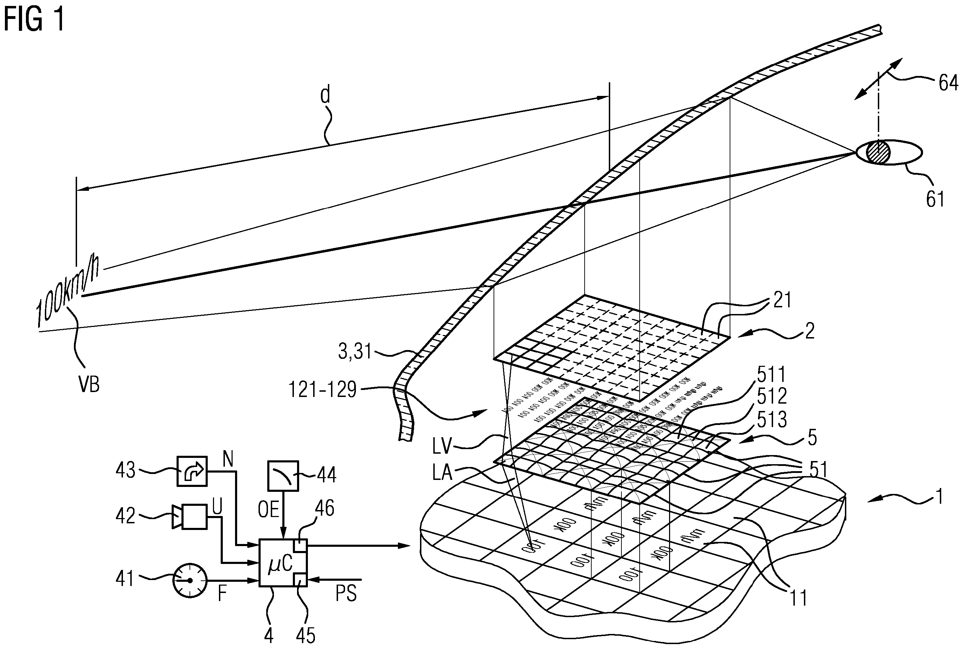

Fig.1 zeigt ein erfindungsgemäßes Head-Up-Display, welches eine Anzeigeeinheit 1, ein Ablenkmittel 2 mit einer Vielzahl von Mikrolinsen 21, ein Bilderzeugungsmittel 4 und ein Spiegelelement 3 aufweist. Das Spiegelelement ist hier als Windschutzscheibe 31 eines Fahrzeugs dargestellt. Die Anzeigeeinheit 1 ist ein selbstleuchtendes Display auf OLED-Basis oder ein anderes selbstleuchtendes Display, oder auch ein durchleuchtetes Display, beispielsweise auf LCD-Basis. Auf der Anzeigeeinheit 1 sind Leuchtpunkte, hier nicht dargestellt, erzeugbar deren Lichtstrahlen LA nach Durchlaufen eines oder mehrerer weiterer optischer Elemente von der Windschutzscheibe 31 reflektiert werden und in ein Auge 61 eines Betrachters fallen. Durch die Windschutzscheibe 31 fallen auch Lichtstrahlen der Umgebung des Fahrzeugs in das Auge 61. Der Betrachter sieht somit die Umgebung überlagert mit einem von dem Head-Up-Display erzeugten Bild. Man erkennt im linken Bereich das überlagerte virtuelle Bild VB, welches hier eine Geschwindigkeitsanzeige "100 km/h" zeigt. Auf der Anzeigeeinheit 1 sieht man eine Vielzahl von Primärelementarbildern 11, die in einem Raster nebeneinander angeordnet sind. Man erkennt die spiegelverkehrt dargestellte Geschwindigkeitsangabe des virtuellen Bildes VB. Die Lichtstrahlen LA, die von einem einzelnen Primärelementarbild 11 der Anzeigeeinheit 1 ausgehen, fallen auf einen optischen Vervielfacher 5. Der optische Vervielfacher 5 weist eine Vielzahl von 3 x 3-Linsenmatrizen 51 auf. Jede Linsenmatrix 51 vervielfacht ein Primärelementarbild 11 in neun Elementarbilder 121-129. Die entsprechenden Lichtstrahlen LV der Elementarbilder 121-129 fallen auf je eine Mikrolinse 21. Das Ablenkmittel 2 ist im Strahlengang zwischen der Anzeigeeinheit 1 und dem Spiegelelement 3 angeordnet und lenkt die Lichtstrahlen LA, LV unterschiedlicher Leuchtpunkte der Anzeigeeinheit 1 in unterschiedliche Abstrahlrichtungen ab.

Das Bilderzeugungsmittel 4 erzeugt für jede Linsenmatrix 51 ein dem Umgebungslicht zu überlagerndes Primärelementarbild 11. Die entsprechende Information wird an die Anzeigeeinheit 1 geleitet. Das Primärelementarbild 11 weist im dargestellten Beispiel Fahrzeugzustandsinformationen F auf, Umgebungsinformationen U und Navigationsinformationen N. Die Fahrzeugzustandsinformationen F kommen beispielsweise von einem hier angedeuteten Tacho 41. Die Umgebungsinformationen U kommen von einer hier angedeuteten Kamera 42, die Navigationsinformationen N von einem hier angedeuteten Navigationsgerät 43. Diese werden den Bilderzeugungsmittel 4 zugeführt und von dieser verarbeitet. Die vom Betrachter wahrgenommene Auflösung des virtuellen Bildes hängt an der Dichte der Mikrolinsen 21. Bei einer ebenen Windschutzscheibe 31 wird jedes Elementarbild 121-129 im Strahlengang bis zum Auge 61 praktisch nicht verzerrt. Bei einer gekrümmten Windschutzscheibe 31 treten geringe Unterschiede in der Verzerrung auf, und eine Kompensation ist erforderlich. Es hat sich herausgestellt, dass es ausreicht, diese Kompensation für das Primärelementarbild vorzunehmen, sodass die Kompensation für alle aus einem Primärelementarbild entstandenen Elementarbilder gleich ist. Die Kompensation wird von dem Bilderzeugungsmittel 4 aufgrund Optischer Eigenschaften OE der Windschutzscheibe 31 berechnet, die es aus einem Datensatz 44 übernimmt.

Das Head-Up-Display arbeitet nach dem sogenannten Integral-Imaging-Prinzip, welches weiter unten erläutert wird. Man erkennt die Distanz d um die das virtuelle Bild VB vor der Windschutzscheibe 31 zu sehen ist.

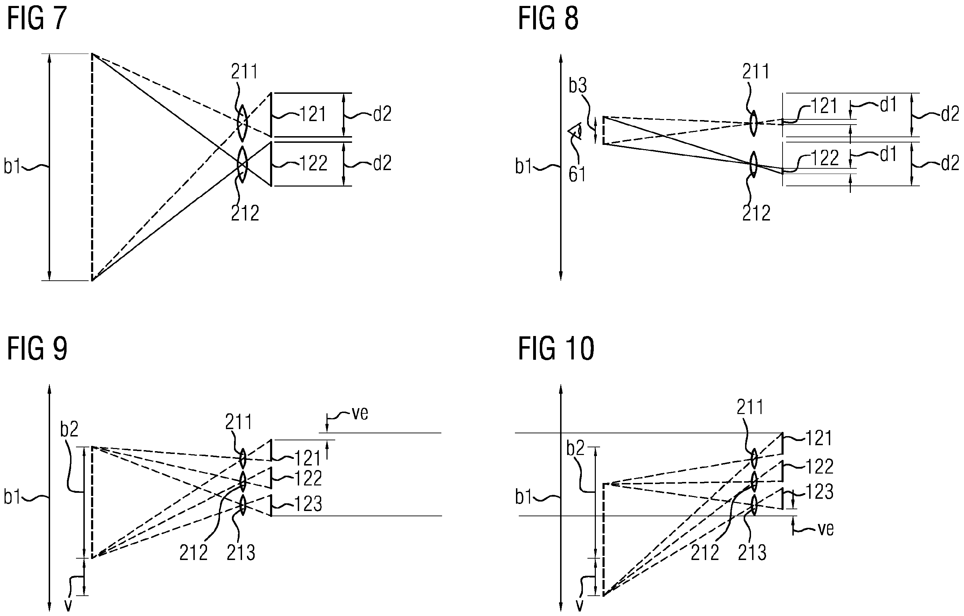

Ein mittels Doppelpfeil angedeuteter Positionssensor 64 detektiert eine Veränderung der Position des Auges 61 in horizontaler Richtung. Ein entsprechendes Positionssignal PS wird dem Bilderzeugungsmittel 4 zugeführt. Ein Bildverschiebemittel 45 des Bilderzeugungsmittels 4 berechnet daraus eine Verschiebung der auf der Anzeigeeinheit 1 darzustellenden Primärelementarbilder 11. Falls unterschiedliche Bilder für das linke und das rechte Auge für jeweils eine separate Eyebox schmaler Breite b3 gewünscht sind, generiert ein Bildalternierungsmittel 45 des Bilderzeugungsmittels 4 alternierende Primärelementarbilder 11, die auf der Anzeigeeinheit 1 dargestellt werden. Näheres dazu ist weiter unten zu Fig.8-10 beschrieben. Der Positionssensor 64 detektiert in einer Weiterbildung auch die Veränderung der Position des Auges 61 in vertikaler Richtung, die entsprechend zur Verschiebung der darzustellenden Pixel ausgewertet wird.

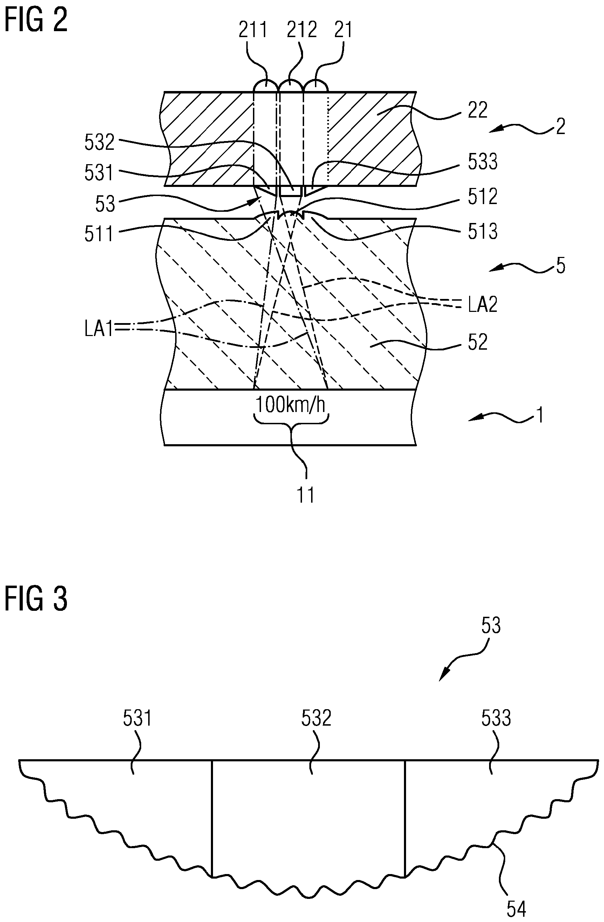

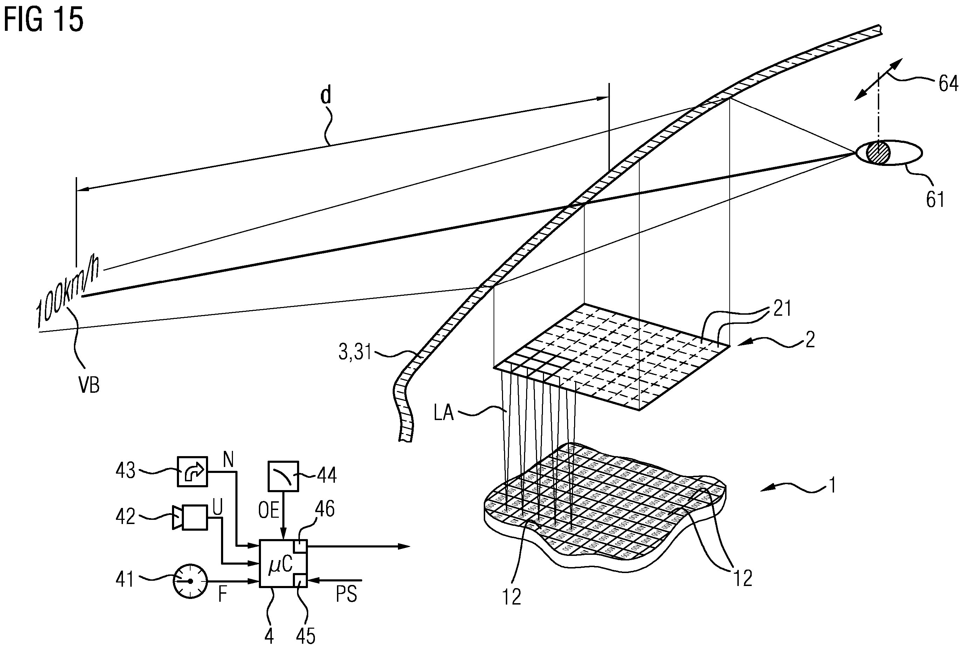

Fig. 15 zeigt eine andere Art Head-Up-Display nach dem Prinzip des Integral Imaging, bei der kein optischer Vervielfacher vorhanden ist. Hier werden die Elementarbilder 12 direkt von der Anzeigeeinheit 12 erzeugt. Die Lichtstrahlen LA, die hier wie in Fig.2 durch Lichtkegel schematisch angedeutet sind, fallen dann direkt von der Anzeigeeinheit 1 auf die Mikrolinsen 21 des Linsenelements 2. Das zuvor für die Primärelementarbilder 11 beziehungsweise die Elementarbilder 121-129 ausgeführte gilt hier entsprechend angepasst für die Elementarbilder 12. Alle anderen dargestellten Elemente entsprechen denjenigen der Fig.2 und sind mit entsprechenden Bezugszeichen versehen.

Fig.2 zeigt als vorteilhaftes Ausführungsbeispiel das Ablenkmittel 2 und einen optischen Vervielfacher 5 in geschnittener Darstellung. Der optische Vervielfacher 5 weist eine transparente Scheibe 52 auf, die auf der Anzeigeeinheit 1 aufliegt. Die Geschwindigkeitsanzeige eines Primärelementarbildes 11 ist schematisch angedeutet. Lichtstrahlen LA1, LA2 durchlaufen die transparente Scheibe 52 und werden von Linsenelementen 511, 512, 513, auf je ein Prismenelement 531, 532, 533 einer 3 × 3-Prismenmatrix 53 geleitet. Die Prismenmatrix 53 ist ebenfalls Teil des optischen Vervielfacher 5, hier aber an der Unterseite einer transparenten Scheibe 22 angeordnet, an deren Oberseite die Mikrolinsen 21 des Ablenkmittels 2 angeordnet sind. Die Lichtstrahlen LA1, deren Lichtstrahlenbündel durch die strichpunktierten Linien begrenzt ist, fällt durch das Linsenelement 511, durchläuft den Spalt zwischen transparenter Scheibe 52 und transparenter Scheibe 22 und wird dann von dem Prismenelement 531 auf die Mikrolinse 211 geleitet. Das Lichtstrahlenbündel der Lichtstrahlen LA2 wird durch gestrichelte Linien begrenzt, durchläuft das mittlere Linsenelement 512, das mittlere Prismenelement 532 und dann die Mikrolinse 212. Somit treten aus jeder der Mikrolinsen 21, 211, 212 ein Lichtstrahlenbündel aus, das dem gesamten Primärelementarbild 11 entspricht. Dieses wird somit vervielfacht. Der Einfachheit halber ist hier nur ein Primärelementarbild 11 sowie die dazugehörige Linsenmatrix 51, Prismenmatrix 53 und Mikrolinsen 21, 211, 212 gezeigt. Nach links und rechts schließen sich entsprechende Bauteile für die benachbarten Primärelementarbilder, die hier nicht dargestellt sind, an. Der Spalt zwischen den beiden transparenten Scheiben 22, 52 ist entweder mit Luft gefüllt, oder mit einem anderen optisch transparenten Material.

Fig.3 zeigt ein Detail einer Prismenmatrix 53 im Querschnitt. Man erkennt das zentrale Prismenelement 532 welches im wesentlichen ein Plättchen mit planparallelen Oberflächen ist. Da das zentrale Linsenelement 512 senkrecht im optischen Strahlengang angeordnet ist, also keine Verkippung aufweist, ist hier kein Verkippungsausgleich durch ein Prisma erforderlich. Das links dargestellte Prismenelement 531 weist eine Prismenstruktur auf, die so ausgebildet ist, dass sie die Verkippung der Hauptstrahlrichtung durch das Linsenelement 511 im optischen Strahlengang kompensiert. Entsprechendes gilt für das Prismenelement 533 im Bezug auf das Linsenelement 513. Die Prismenelemente 531, 532, 533 weisen an ihrer nach unten zeigenden Oberfläche eine aufgerauhte Oberfläche auf, die als Diffusor 54 wirkt.

Fig.4 zeigt drei Linsenelemente 511, 512, 513, die so ausgebildet sind, dass sie jeweils die gesamte Fläche einer Zelle der Prismenmatrix 53 ausfüllen würden. Linsenteilelemente 510 werden entlang der senkrechten Teillinien ausgeschnitten und wie im unteren Teil der Fig. 4 gezeigt zusammengesetzt. Die hier gezeigte Zusammensetzung ist nur beispielhaft, die Buchstaben P, Q, R deuten an, welche der Linsenteilelemente 510 welchem der Linsenelemente 511, 512, 513 entsprechen. Die Linsenteilelement 510 mit Buchstabe R erfüllen die Funktion des Linsenelements 513, weisen für jede Einzellinse aber einen größeren Aperturdurchmesser auf als das entsprechende Linsenelement 513 wie in Fig.2 dargestellt. Entsprechendes gilt für die Linsenteilelemente 510 die mit den Buchstaben P und Q bezeichnet sind.

Fig.5 zeigt eine schematische Anordnung von Linsenteilelementen 510 in Draufsicht. Das mit dem Buchstaben E gekennzeichnete zentrale Linsenelement 512 wird auf neun Linsenteilelemente 510 mit dem Buchstaben E aufgeteilt und deckt somit eine größere effektive Fläche ab. Entsprechendes gilt für die anderen mit den Buchstaben A,B,C,D,G,H,K,L gekennzeichneten Linsenteilelemente 510. Die hier dargestellte regelmäßige Anordnung ist nur ein Beispiel, andere Teilungen und anders verteilte Anordnungen, auch unregelmäßig verteilte, liegen ebenfalls im Rahmen der Erfindung.

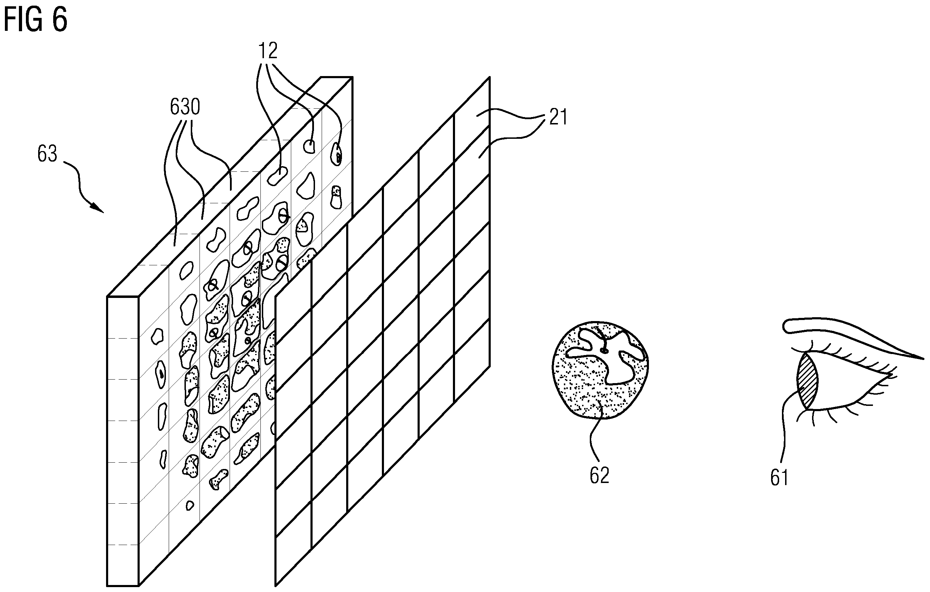

Fig.6 zeigt das Prinzip des Integral Imaging. Als Integral Imaging wird eine Technologie bezeichnet, die es ermöglicht, autostereoskopische oder multistereoskopische Bilder anzuzeigen. Bei entsprechender Ausführung wird es darüber hinausgehend ermöglicht, dass auf jede Tiefenebene akkomodiert werden kann. Beim Head-Up-Display bedeutet dies, dass der Betrachter ohne umzufokussieren zwischen Umgebung und dargestellter Anzeige wechseln kann. Das Integral Imaging deckt im Idealfall alle signifikanten Tiefenreize ab, bei kleinen Linsen auch die Akkomodation. Es ist dem Betrachter möglich, ohne die Verwendung von speziellen Brillen dreidimensionale Bilder zu sehen. Die Voraussetzung dafür wird durch das Positionieren der Mikrolinsen 21 über einer gewöhnlichen zweidimensionalen Anzeigeeinheit 1 geschaffen. Dadurch wird ein Lichtfeld approximiert, welches es dem Betrachter ermöglicht, auf unterschiedliche Tiefen der dargestellten Szene zu fokussieren. Abgebildet ist der invertiert Fall: eine reale Szene, hier dargestellt durch einen Apfel 62, wird durch viele leicht verschobene Mikrolinsen 21 in vielen leicht verschobenen Perspektiven auf einen zweidimensionalen Bildsensor 63 abgebildet. Die dreidimensionale Information des Apfels 62 wird somit in viele Abbilder aus vielen verschiedenen Perspektiven überführt. Die resultierenden einzelnen Bilder aus den verschiedenen Perspektiven werden Elementarbilder 12 genannt. Man kann sich vorstellen, dass jedes Elementarbild 12 von einer Elementarkamera 630 aufgenommen wird. Statt des Bildsensors 63 wird dann eine Vielzahl von Elementarkameras 630 verwendet. Wenn das aufgenommene Raster von Elementarbildern 12 wieder geeignet durch das Raster von Mikrolinsen 21 betrachtet wird, so sieht das Auge 61 die ursprünglich aufgenommene dreidimensionale Szene.

Fig.7 zeigt Größenverhältnisse bei einem erfindungsgemäßen Head-Up-Display mit einer breiten Eyebox. Dazu ist schematisch die Breite b1 der Eyebox angegeben. Eine Mikrolinse 211 bildet ein Elementarbild 121 auf die Breite b1 ab. Eine Mikrolinse 212 bildet das auf der Anzeigeeinheit 1 benachbart dargestellte Elementarbild 122 auf die Breite b1 der Eyebox ab. Der Übersichtlichkeit halber wird hier auf die Darstellung weiterer optischer Elemente, wie beispielsweise den optischen Vervielfacher 5, verzichtet.

Fig.9 zeigt die Größenverhältnisse ähnlich zu Fig.7, hier aber für eine Eyebox mittlerer Breite b2. Man sieht, dass sie etwa halb so groß ist die Breite b1 der breiten Eyebox. Mikrolinsen 211, 212, 213 bilden Elementarbilder 121, 122, 123 auf die Breite b2 der Eyebox ab. Man erkennt, dass die Elementarbilder 121, 122, 123 kleiner sind als diejenigen der Fig.7, und somit jeweils weniger Fläche der Anzeigeeinheit 1 erfordern. Bei einer kleineren Breite b2 der Eyebox reicht somit eine kleinere Fläche der Anzeigeeinheit pro Elementarbild aus. Wird die gleiche Fläche verwendet, so sinkt bei entsprechender Auslegung die Anforderung an die Auflösung der Anzeigeeinheit. Wird die Breite b1 als b1=150 mm gewählt, so deckt die Eyebox die normalerweise für Hin- und Herbewegungen des Kopfs des Betrachters ausreichende Breite ab. Wird eine kleinere Eyebox mit Breite b2=75 mm gewählt, so deckt dies den normalen Augenabstand eines Betrachters ab, bei einer Bewegung des Kopfes zur Seite muss die Eyebox allerdings nachgeführt werden. Dies ist durch die Verschiebung v angedeutet. Dabei verschieben sich die Elementarbilder 121, 122, 123 um die Strecke ve, wie man im Vergleich zur nachfolgenden Fig.10 erkennt. Daher wird bei einer Seitwärtsbewegung der Augen 61 des Betrachters auch die Eyebox der mittleren Breite b2 um die Verschiebung v verschoben, was eine um die Strecke ve verschobene Darstellung der Elementarbilder 121,122,123 auf der Anzeigeeinheit 1 erfordert. Die Bilderzeugungsmittel 4 sind daher dazu ausgebildet, eine entsprechende Verschiebung auf ein entsprechendes Sensorsignal hin vorzunehmen.

Fig. 10 zeigt dieselbe Anordnung von Mikrolinsen 211, 212, 213 wie Fig.9 und eine entsprechende mittlere Breite b2 der Eyebox. Diese ist allerdings um die Verschiebung v verschoben aufgrund einer Seitwärtsbewegung des Kopfes des Betrachters. Die Elementarbilder 121, 122, 123 werden somit, wie von dem Bilderzeugungsmittel 4 berechnet, um die Strecke ve verschoben auf der Anzeigeeinheit 1 angezeigt. Bei Kompensation der Krümmung der Windschutzscheibe 33 wird gegebenenfalls etwas mehr angepasst als nur die Verschiebung ve. Dies wird oft auch als Verzerrung bezeichnet.

Fig.8 zeigt eine Eyebox mit schmaler Breite b3, die die Breite eines Auges 61 abdeckt. Man erkennt, dass die durch die Mikrolinsen 211, 212 abgebildeten Elementarbilder 121,122 eine wesentlich kleinere Dimension d1 als die Dimension d2 der entsprechenden Elementarbilder 121,122 der Fig.7 einnehmen. Eine noch geringere Fläche der Anzeigeeinheit 1 pro Elementarbild reicht somit bei schmaler Breite b3 der Eyebox, die ein Auge 61 abdeckt, aus. Hier ist allerdings zu beachten, dass jedes Auge 61 eine eigene Eyebox benötigt und dass zeitliches Multiplexing erforderlich ist. Dennoch reduziert sich die Anforderung an die Auflösung der Anzeigeeinheit 1 nochmals im Vergleich zu der in Fig.9 und Fig.10 gezeigten Eyebox mittlerer Breite b2.

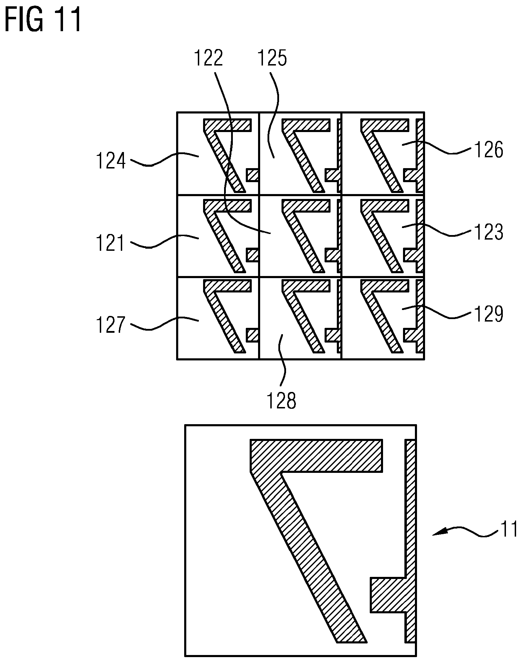

Fig.11 zeigt ein Primärelementarbild 11 und daraus vervielfältigte Elementarbilder 121-129. Es handelt sich hier um die Darstellung der Zahl "47", von der in diesem Primärelementarbild nur die Ziffer "7" und ein hinterer Teil der Ziffer "4" spiegelverkehrt zu sehen sind. Man erkennt, dass das Elementarbild 129 noch am ehesten dem verkleinerten Primärelementarbild 11 entspricht, während alle anderen Elementarbilder 121-128 durch größeres Verschieben und Abschneiden aus dem Primärelementarbild 11 hervorgehen. Diese Verschiebung wird durch geeignete Anpassung der Flächen der Linsenelemente 511-513 und der entsprechenden Prismenelemente 531-533 erzielt. Die links von dem Elementarbild 129 abgebildeten Elementarbilder 124, 125, 121, 122, 127, 128 sind nach rechts verschoben. Die oberhalb des Elementarbilds 129 dargestellten Elementarbilder 121-126 sind nach unten verschoben. Somit werden Elementarbilder erzeugt, die nahezu den im Idealfall beim Integral Imaging - siehe Fig.6 - von den einzelnen Elementarkameras 630 aufgezeichneten Elementarbildern entsprechen.

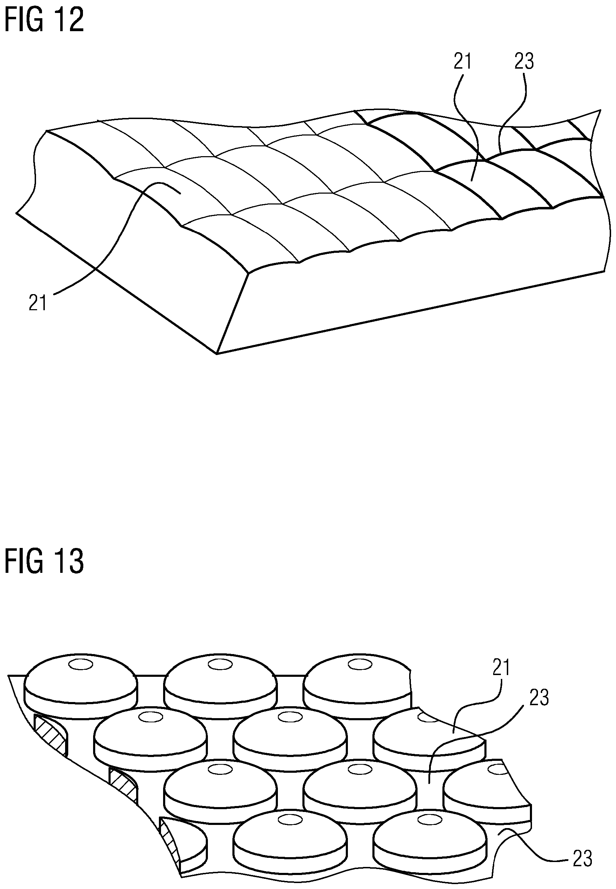

Fig.12 zeigt einen Ausschnitt eines beispielhaften Rasters aus Mikrolinsen 21. Die Mikrolinsen decken hier eine rechteckige Fläche ab, sodass alle Leuchtpunkte der Anzeigeeinheit 1, die ein Elementarbild 12 bzw. ein Primärelementarbild 11 darstellen, auch komplett unter eine optisch wirksamen Fläche der Mikrolinsen 21 liegen. In einem alternativen Teil des dargestellten Rasters befinden sich zwischen den Mikrolinsen 21 intransparente Bereiche 23, die beispielsweise dazu dienen, verschobene Teile eines Primärelementarbild 11, die nicht Teil eines Elementarbild 121-128 sind, zu verdecken. Die rechteckige Anordnung entspricht einer rechteckigen Form der Elemente der Anzeigeeinheit 1. Diese weist beispielsweise Pixel auf, die in vertikaler Richtung weiter ausgedehnt sind als in horizontaler Richtung.

Fig.13 zeigt ein anderes Raster von Mikrolinsen 21, die hier entsprechend der hexagonal dichtesten Packung angeordnet sind. Zwischen den Mikrolinsen 21 befinden sich intransparente Bereiche 23, die Störlicht außerhalb des Nutzbereichs unterdrücken.

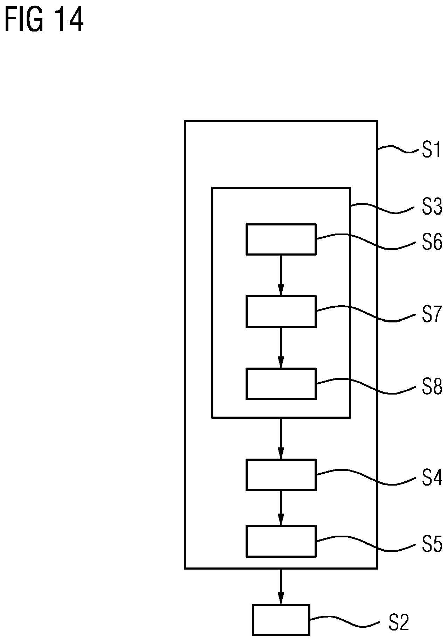

Fig.14 zeigt ein Beispiel eines erfindungsgemäßen Verfahrens zum Betreiben eines Head-Up-Displays für ein Fahrzeug welches eine Anzeigeeinheit 1, ein dieser nachgeschaltetes Raster von Mikrolinsen 21,211-213 und ein Spiegelelement 3 aufweist. In einem ersten Schritt S1 wird einer Vielzahl von Elementarbildern 12,121-129 erzeugt. Jedes der Elementarbilder 12,121-129 entspricht einem Bild einer Elementarkamera 630 einer Vielzahl von nebeneinander angeordneten Elementarkameras 630. Siehe dazu auch Fig. 6. In einem Schritt S2 werden die Elementarbilder 12,121-129 nebeneinanderliegend auf der Anzeigeeinheit 1 dargestellt.

Der Schritt S1 erfolgt vorzugsweise in den folgenden Teilschritten: In Schritt S3 wird eine Vielzahl von Primärelementarbildern 11 berechnet. Anschließend werden im Schritt S4 die berechneten Primärelementarbilder 11 optisch vervielfacht. Im Schritt S5 werden die einzelnen aus den Primärelementarbildern 11 hervorgegangenen vervielfachten Elementarbilder 12,121-129 mit jeweils angepasstem Betrag um die Strecke ve in Richtung zu der optischen Achse des Head-Up-Displays hin verschoben. Gemäß einer bevorzugten Variante werden die Schritte S4 und S5 kombiniert.

Der Schritt S3 erfolgt vorzugsweise in den folgenden Teilschritten: In Schritt S6 wird die Position des Kopfes oder der Augen 61 eines Betrachters detektiert, und in Schritt S7 werden die auf der Anzeigeeinheit 1 darzustellenden Primärelementarbilder 11 oder Elementarbilder 12,121-129 entsprechend der Positionsänderung PS verschoben beziehungsweise verzerrt, und ein entsprechendes Signal an die Anzeigeeinheit gesendet. Eine Verzerrung tritt auf, wenn zur Kompensation einer Krümmung der Windschutzscheibe die Elementarbilder 12,121-129 mehr als nur verschoben werden. Im Schritt S8 werden die Bilder 11, 12, 121-129 für das rechte und das linke Auge 61 auf der Anzeigeeinheit 1 alternierend dargestellt. Dabei ist die Beleuchtung so ausgeführt, dass jedes Auge 61 jeweils nur das ihm zugeordnete Bild sieht.

Erfindungsgemäß wird vorgeschlagen, sogenannte Integral Imaging Systeme als bauraumsparende Lösung zur Anzeige virtueller Bilder im Head-Up-Display eines Kraftfahrzeugs zu verwendet. Integral Imaging Systeme synthetisieren Lichtfelder über räumliches Multiplexing. Das heißt, Winkelbereiche im Lichtfeld werden durch Positionen im Elementarbild gesteuert. Da durch dieses räumliche Multiplexing für jeden Bildpunkt im virtuellen Bild eine Vielzahl von Bildpunkten in den Elementarbildern 12 benötigt wird, stellt das eine erhebliche Anforderung an die Auflösung, also die Pixelanzahl und die Pixeldichte des Elementarbildgebers, der Anzeigeeinheit 1, dar. Bei sichtbarem Licht wird die sinnvoll nutzbare Pixeldichte zudem durch das Beugungslimit der Mikrolinsenanordnung beschränkt und damit auch die erreichbare Auflösung des virtuellen Bildes. Um mit reinem Integral Imaging derzeitige Anforderungen an die Optik eines Head-Up-Displays zu erfüllen, wären mehr als 80.000 Pixel horizontal bei einer Pixeldichte von mehr als 100 Pixel pro Millimeter erforderlich, wobei das Beugungslimit auch hier eine physikalische Grenze setzt. Erfindungsgemäß wird vorgeschlagen, wie ein Head-Up-Display mit einer geringeren Pixelanzahl und Pixeldichte der Anzeigeeinheit 1 gemäß Integral Imaging erreichbar ist.

Da sich die beiden Augen 61 des Fahrers auf einer horizontalen Achse befinden, müssen für die vertikale Richtung die stereoskopischen Aspekte nicht gleichermaßen erfüllt werden wie für die horizontale Richtung. Durch in vertikaler Richtung stärker ausgedehnte Pixel als in horizontaler Richtung, reduziert sich die Anforderung an die Auflösung der Anzeigeeinheit 1. Die erforderliche Anzahl der Pixel pro Elementarbild 12 hängt von der Größe der gleichzeitig abzudeckenden Eyebox ab, dem sogenannten Eindeutigkeitsbereich. Durch Detektion der sich ändernden Positionen der Augen 61, das sogenannte Eyetracking, und dynamische Anpassung des auf der Anzeigeeinheit 1 anzuzeigenden Inhalts an die Betrachterposition wird die Größe dieser Eyebox auf ungefähr einen Augenabstand und damit die Hälfte einer typischen Breite b1 der Eyebox reduziert. Damit halbieren sich auch die Auflösungsanforderungen. Eine weitere Reduktion der Breite der Eyebox auf etwa 2cm ist erfindungsgemäß möglich, wenn jeweils nur ein Auge 61abzudecken ist. Dazu wird über zeitliches Multiplexing der Anzeigeeinheit 1 die Eyebox abwechselnd beiden Augen zur Verfügung gestellt. Dies erfordert eine Synchronisierung des auf der Anzeigeeinheit 1 anzuzeigenden Inhalts und Maßnahmen, die das Bild für das jeweils andere Auge 61 unsichtbar machen.

Da beim Integral Imaging eine Vielzahl kaum unterschiedlicher Elementarbilder dargestellt wird, ist es von erheblichem Vorteil, wie erfindungsgemäß vorgeschlagen, Gruppen von Elementarbildern 12, 121-129 jeweils aus einem zugehörigen Primärelementarbild 11, welches auf der Anzeigeeinheit 1 dargestellt wird, optisch abzuleiten. Diese werden dabei verkleinert, sodass sowohl die Anforderung an die Pixelanzahl als auch an die Pixeldichte der Anzeigeeinheit 1 reduziert werden. Die optische Ableitung, hier auch als Vervielfachung bezeichnet, ist dabei im Ausführungsbeispiel über speziell abgestimmte Vielzahlen von Linsenelementen 511-513, realisiert, wobei diese auch zur Verminderung der Beugungsproblematik ineinander geschachtelt werden, siehe die Linsenteilelemente 510.

Durch eine größere Ausdehnung der Leuchtpunkte in vertikaler Richtung kann die benötigte Pixelzahl der Anzeigeeinheit, deren Pixelanzahl, um etwa eine Größenordnung reduziert werden. Mit Hilfe von Eyetracking - entsprechende Systeme sind ohnehin zunehmend in Fahrzeugen vorhanden - lässt sich die benötigte Pixelzahl der Anzeigeeinheit 1 typischerweise um einen Faktor zwei verringern und gleichzeitig die nutzbare Breite der Eyebox vergrößern. Steuert man beispielsweise die Anzeigeeinheit 1 so an, dass beide Augen 61 alternierend abgedeckt werden, reduziert sich die benötigte Auflösung der Anzeigeeinheit 1 erneut um einen Faktor größer drei. Mittels mehrfacher Replikation der Elementarbilder 12, 121-129 aus einem Primärelementarbild 12 wird die benötigte Auflösung der Anzeigeeinheit 1 wiederum um etwa eine Größenordnung reduziert.

Die Kombination der angeführten technischen Merkmale ermöglicht es, die Anforderungen an die Auflösung der Anzeigeeinheit 1 so zu reduzieren, dass es möglich ist, mit einem erfindungsgemäß weiterentwickelten Integral Imaging System die Anforderungen an ein aktuelles Head-Up-Display zu erfüllen.

Das in Fig.1 gezeigte Ausführungsbeispiel des erfindungsgemäßen Integral Imaging Head-Up-Displays zeigt, dass aus jedem Primarelementarbild 11 neun Elementarbilder 121-129 mithilfe eines optischen Vervielfachers 5 mit speziellen Linsenmatrizen 51 erzeugt werden. Die für die entsprechenden Elementarbilder 121-129 benötigten Bildbereiche werden durch die Anzeigeeinheit 1 als Primarelementarbilder 11 dargestellt. Eine Gruppe von hier neun Linsenelementen 511-513, die jeweils passend zentriert sind, erzeugt daraus neun verkleinerte Elementarbilder 121-129. Die Gesamtheit aller Elementarbilder 12 formt in Verbindung mit der Matrix aus Mikrolinsen 21 das virtuelle Bild VB, das über die Spiegelung an der Windschutzscheibe 31 im hier gezeigten Ausführungsbeispiel etwa d=6500mm hinter dieser erscheint.

Die Anzeigeeinheit 1 weist im allgemeinen quadratische Pixeln auf. Da die stereoskopischen Aspekte für die vertikale Richtung nicht gleichermaßen erfüllt werden müssen wie für die horizontale Richtung, wird gemäß einer Ausgestaltungsform der Erfindung ein Bildgeber mit Pixeln mit angepasstem Seitenverhältnis vorteilhaft verwendet. Die Auflösung der Anzeigeeinheit 1 wird durch Reduktion der Breite der Eyebox in Kombination mit Headtracking weiter reduziert. Die verkleinerte Eyebox deckt gleichzeitig beide Augen 61 ab und wird dem Betrachter nachgeführt. Eine weitere Reduktion der Breite der Eyebox, sodass sie nur noch ein Auge 61 abdeckt, führt zu geringeren Anforderungen an die Auflösung der Anzeigeeinheit 1. In diesem Fall wird die Eyebox alternierend den beiden Augen 61 zur Verfügung gestellt. Gleichzeitig wird der Bildinhalt auf der Anzeigeeinheit 1 entsprechend für das jeweilige Auge 61 angepasst und es werden Maßnahmen getroffen, die den Bildinhalt für das jeweilige andere Auge 61 unsichtbar machen.

Wie in der Optik üblich, können grundlegende Funktionen über verschiedenste Anordnungen realisiert werden. Zum Beispiel lassen sich Abbildungen über Linsen, Spiegel, Hologramme, und vieles mehr realisieren. Die Vervielfachung von Bildern ist über Mehrfachreflexe, über Gitter, über eine Anordnung von Strahlteilern, und anderes realisierbar. Die Vielzahl von Möglichkeiten ist dem Fachmann bekannt und wird daher hier nicht im Detail dargestellt. Es versteht sich, dass nicht nur die in der Beschreibungseinleitung und in den Ausführungsbeispielen beschriebenen Möglichkeiten und Kombinationen, sondern auch im Vermögen des Fachmanns Weiterbildungen und Kombinationen im Rahmen der Erfindung liegen.

## Patentansprüche

1. Head-Up-Display nach dem Prinzip des Integral Imaging für ein Fahrzeug, aufweisend eine Anzeigeeinheit (1), Ablenkmittel (2), welche eine Vielzahl von Mikrolinsen (21) aufweisen, und Bilderzeugungsmittel (4), welche ein Bildsignal generieren, mittels dessen die Anzeigeeinheit (1) angesteuert wird, wobei die Bilderzeugungsmittel (4) dazu ausgebildet sind, ein Bildsignal zu erzeugen, mittels welchem die Anzeigeeinheit (1) eine Vielzahl von Primärelementarbildern darstellt, **dadurch gekennzeichnet,**
**dass** die Anzeigeeinheit (1) Primärelementarbilder (11) darstellt, das Head-Up-Display einen optischen Vervielfacher (5) aufweist, der jedes Primärelementarbild (11) in eine Vielzahl von Elementarbildern (12, 121-129) optisch vervielfacht, und das Ablenkmittel (2) eine der Anzahl der Elementarbilder (12, 121-129) entsprechende Anzahl von Mikrolinsen (21,211-213) aufweist, wobei jedes Elementarbild einer Mikrolinse zugeordnet ist.

2. Head-Up-Display nach Anspruch 1, **dadurch gekennzeichnet, dass** die Bilderzeugungsmittel (4) eine Berechnungseinheit aufweisen.

3. Head-Up-Display nach einem der vorhergehenden Ansprüche, **dadurch gekennzeichnet, dass** der optische Vervielfacher (5) eine Vielzahl von n x m-Linsenmatrizen (51) aufweist.

4. Head-Up-Display nach Anspruch 3, **dadurch gekennzeichnet, dass** Linsenelemente (511 512 513) der n x m-Linsenmatrix (51) in Linsenteilelemente (510) zerlegt sind, die ineinander verschachtelt angeordnet die n x m-Linsenmatrix (51) bilden.

5. Head-Up-Display nach einem der Ansprüche 3 oder 4,
**dadurch gekennzeichnet, dass** der optische Vervielfacher (5) eine Vielzahl von n x m-Prismenmatrizen (53) aufweist.

6. Head-Up-Display nach Anspruch 5, **dadurch gekennzeichnet, dass** Prismenelemente (531-533) der n x m-Prismenmatrix (53) einen Diffusor (54) aufweisen.

7. Head-Up-Display nach einem der vorhergehenden Ansprüche
**dadurch gekennzeichnet, dass** der optische Vervielfacher (5) ausgebildet ist, zusätzlich zu der Vervielfachung auch eine Verschiebung (ve) und/oder Verzerrung hervorzurufen.

8. Head-Up-Display nach einem der vorhergehenden Ansprüche,
**dadurch gekennzeichnet, dass** es ein Positionsdetektionsmittel (64) aufweist und ein mit einem detektierten Positionssignal (PS) beaufschlagtes Bildverschiebemittel (45).

9. Head-Up-Display nach Anspruch 8, **dadurch ge-kennzeichnet**, **dass** es ein Bildalternierungsmittel (45) aufweist.

10. Verfahren zum Betreiben eines Head-Up-Display nach dem Prinzip des Integral Imaging für ein Fahrzeug mit einer Anzeigeeinheit (1), einem dieser nachgeschalteten Raster von Mikrolinsen (21,211-213) und einem Spiegelelement (3), aufweisend:
- Erzeugen (S1) einer Vielzahl von Primärelementarbildern (11),
- Darstellen (S2) der Primärelementarbilder (11) nebeneinanderliegend auf der Anzeigeeinheit (1), und
- optisches Vervielfachen (S4) jedes Primärelementarbilds (11) zu einer Vielzahl von Elementarbildern (12,121-129), wobei jedes Elementarbild einer Mikrolinse (21,211-213) zugeordnet ist.

11. Verfahren nach Anspruch 10, weiterhin aufweisend:
- Berechnen (S3) einer Vielzahl von Primärelementarbildern (11) .

12. Verfahren nach einem der Ansprüche 10 bis 11, weiterhin aufweisend:
- Verschieben und/oder Verzerren (S5) einzelner aus den Primärelementarbildern (11) hervorgegangener vervielfachter Elementarbilder (12,121-129) mit jeweils angepasstem Betrag (ve) in Richtung zu der optischen Achse des Head-Up-Displays hin.

13. Verfahren nach einem der Ansprüche 10 bis 12, weiterhin aufweisend:
- Detektieren (S6) der Position des Kopfes oder der Augen (61) eines Betrachters und
- Verschieben (S7) der auf der Anzeigeeinheit (1) dargestellten Bilder (11, 12,121-129) entsprechend der Positionsänderung (PS).

14. Verfahren nach einem der Ansprüche 10 bis 13, weiterhin aufweisend:
- Alternierendes Darstellen (S8) der Bilder (11, 12,121-129) für das rechte und das linke Auge (61) auf der Anzeigeeinheit (1) und
- Zugänglichmachen für das jeweilige Auge (61).

## Claims

1. Head-up display according to the principle of integral imaging for a vehicle, having a display unit (1), diverting means (2) having a multiplicity of microlenses (21), and image generation means (4) generating an image signal that is used to control the display unit (1), wherein the image generation means (4) are embodied to generate an image signal with which the display unit (1) represents a multiplicity of primary elementary images, **characterized in that** the display unit (1) represents primary elementary images (11), the head-up display has an optical multiplier (5) optically multiplying each primary elementary image (11) into a multiplicity of elementary images (12, 121-129), and the diverting means (2) has a number of microlenses (21, 211-213) that corresponds to the number of the elementary images (12, 121-129), wherein each elementary image is assigned to a microlens.

2. Head-up display according to Claim 1, **characterized in that** the image generation means (4) have a computation unit.

3. Head-up display according to either of the preceding claims, **characterized in that** the optical multiplier (5) has a multiplicity of n × m lens matrices (51).

4. Head-up display according to Claim 3, **characterized in that** lens elements (511 512 513) of the n × m lens matrix (51) are decomposed into lens sub-elements (510) that, when arranged in an interleaved manner, form the n × m lens matrix (51).

5. Head-up display according to Claim 3 or 4, **characterized in that** the optical multiplier (5) has a multiplicity of n × m prism matrices (53).

6. Head-up display according to Claim 5, **characterized in that** prism elements (531-533) of the n × m prism matrix (53) have a diffuser (54).

7. Head-up display according to one of the preceding claims,
**characterized in that** the optical multiplier (5) is embodied to bring about, in addition to the multiplication, also a displacement (ve) and/or distortion.

8. Head-up display according to one of the preceding claims,
**characterized in that** it has a position detection means (64) and an image displacement means (45) to which a detected position signal (PS) is applied.

9. Head-up display according to Claim 8, **characterized in that** it has an image alternation means (45).

10. Method for operating a head-up display according to the principle of integral imaging for a vehicle having a display unit (1), a grid of microlenses (21, 211-213) connected downstream of the display unit (1), and a mirror element (3), including:
- generating (S1) a multiplicity of primary elementary images (11),
- representing (S2) the primary elementary images (11) so that they lie adjacent to one another on the display unit (1), and
- optically multiplying (S4) each primary elementary image (11) to obtain a multiplicity of elementary images (12, 121-129), wherein each elementary image is assigned to a microlens (21, 211-213) .

11. Method according to Claim 10, furthermore including:
- calculating (S3) a multiplicity of primary elementary images (11) .

12. Method according to one of Claims 10 to 11, further including:
- displacing and/or distorting (S5) individual ones of the multiplied elementary images (12, 121-129), obtained from the primary elementary images (11), with in each case an adapted absolute value (ve) in the direction toward the optical axis of the head-up display.

13. Method according to one of Claims 10 to 12, further including:
- detecting (S6) the position of the head or the eyes (61) of an observer and
- displacing (S7) the images (11, 12, 121-129), which are represented on the display unit (1), in accordance with the position change (PS).

14. Method according to one of Claims 10 to 13, further including:
- representing (S8) the images (11, 12, 121-129) for the right and the left eye (61) in alternation on the display unit (1) and
- presenting them to the respective eye (61).

## Revendications

1. Afficheur tête haute selon le principe de l'image intégrale pour un véhicule, comprenant une unité d'affichage (1), des moyens de déviation (2), qui possèdent une pluralité de microlentilles (21), et des moyens de génération d'images (4), qui génèrent un signal d'image au moyen duquel est commandée l'unité d'affichage (1), les moyens de génération d'images (4) étant configurés pour générer un signal d'image au moyen duquel l'unité d'affichage (1) représente une pluralité d'images élémentaires primaires, **caractérisé en ce que** l'unité d'affichage (1) représente des images élémentaires primaires (11), l'afficheur tête haute possède un multiplicateur optique (5), qui multiplie optiquement chaque image élémentaire primaire (11) en une pluralité d'images élémentaires (12, 121-129), et les moyens de déviation (2) possèdent un nombre de microlentilles (21, 211-213) correspondant au nombre d'images élémentaires (12, 121-129), une microlentille étant associée à chaque image élémentaire.

2. Afficheur tête haute selon la revendication 1, **caractérisé en ce que** les moyens de génération d'images (4) possèdent une unité de calcul.

3. Afficheur tête haute selon l'une des revendications précédentes, **caractérisé en ce que** le multiplicateur optique (5) possède une pluralité de matrices de n x m lentilles (51).

4. Afficheur tête haute selon la revendication 3, **caractérisé en ce que** les éléments de lentille (511, 512, 513) de la matrice de n x m lentilles (51) sont décomposés en éléments partiels de lentille (510) qui, imbriqués les uns dans les autres, forment la matrice de n x m lentilles (51).

5. Afficheur tête haute selon l'une des revendications 3 et 4,
**caractérisé en ce que** le multiplicateur optique (5) possède une pluralité de matrices de n x m prismes (53).

6. Afficheur tête haute selon la revendication 5, **caractérisé en ce que** les éléments de prisme (531-533) de la matrice de n x m prismes (53) possèdent un diffuseur (54).

7. Afficheur tête haute selon l'une des revendications précédentes, **caractérisé en ce que** le multiplicateur optique (5) est configuré pour, en plus de la multiplication, également provoquer un décalage (ve) et/ou une distorsion.

8. Afficheur tête haute selon l'une des revendications précédentes, **caractérisé en ce qu'**il possède un moyen de détection de position (64) et un moyen de décalage d'image (45) qui est sollicité par un signal de position (PS) détecté.

9. Afficheur tête haute selon la revendication 8, **caractérisé en ce qu'**il possède un moyen d'alternance des images (45).

10. Procédé pour faire fonctionner un afficheur tête haute selon le principe de l'image intégrale pour un véhicule, comprenant une unité d'affichage (1), une grille de microlentilles (21, 211-213) montée à la suite de celle-ci et un élément miroir (3), comprenant :
- génération (S1) d'une pluralité d'images élémentaires primaires (11),
- représentation (S2) des images élémentaires primaires (11) les unes à côté des autres sur l'unité d'affichage (1), et
- multiplication optique (S4) de chaque image élémentaire primaire (11) en une pluralité d'images élémentaires (12, 121-129), une microlentille (21, 211-213) étant associée à chaque image élémentaire.

11. Procédé selon la revendication 10, comprenant en outre :
- calcul (S3) d'une pluralité d'images élémentaires primaires (11) .

12. Procédé selon l'une des revendications 10 et 11, comprenant en outre :
- décalage et/ou distorsion (S5) des images élémentaires (12, 121-129) multipliées individuelles provenant des images élémentaires primaires (11) respectivement avec un montant (ve) adapté dans la direction de l'axe optique de l'afficheur tête haute.

13. Procédé selon l'une des revendications 10 à 12, comprenant en outre :
- détection (S6) de la position de la tête ou des yeux (61) d'un observateur et
- décalage (S7) des images (11, 12, 121-129) représentées sur l'unité d'affichage (1) en fonction du changement de position (PS) .

14. Procédé selon l'une des revendications 10 à 13, comprenant en outre :
- représentation alternée (S8) des images (11, 12, 121-129) pour l'œil (61) droit et gauche sur l'unité d'affichage (1) et
- réalisation de l'accessibilité pour l'œil (61) respectif.
